# EUROPEAN PATENT SPECIFICATION

(11) **EP 0 218 418 B1**
(45) Date of publication and mention of the grant of the patent: **07.04.1993**
(21) Application number: 86307368.0
(22) Date of filing: 25.09.1986
(51) Int. Cl.: G02B 6/44

(54) **Method of manufacturing an optical fibre cable**
Verfahren für Herstellung eines faseroptischen Kabels
Méthode pour la fabrication d'un câble à fibre optique

(30) Priority: 04.10.1985 GB 8524484
(43) Date of publication of application: 15.04.1987
(73) Proprietor: NORTHERN TELECOM LIMITED, Montreal, Quebec H2Y 3Y4 (CA)
(72) Inventor: Gannon, John Robert, Chepstow Wales (GB); Benger, Stephen, Gwent South Wales (GB); Jones, David Delme, Gwent Sout Wales (GB)
(74) Representative: Dennis, Mark Charles

(56) References cited:
- EP-A- 0 104 864
- EP-A- 0 170 185
- GB-A- 1 578 680
- GB-A- 2 036 599
- GB-A- 2 141 558
- US-A- 4 147 407
- PATENT ABSTRACTS OF JAPAN, Vol. 9, No. 105 (P-354)[1828], 9th May 1985; & JP-A-59-228 204

## Description

This invention relates to a method of manufacturing an optical fibre cable, incorporating loose optical fibre elements, particularly to the manufacture of such elements.

Optical fibre cables incorporating ribbon optical fibre elements are known. For example, a currently available cable design comprises individual optical fibres coated with ultraviolet-cured epoxy-acrylate coatings and twelve parallel fibres are sandwiched between two adhesive-faced polyester tapes to make a flat ribbon. During the manufacturing process, heat is applied to the polyester tape to heat seal the lateral edges and also to cause the adhesive to adhere to the fibres and cure. This could be up to 100°C, typically 70° or 80°C. These ribbons can then be stacked together and incorporated into a cable sheath, one example being a crossply circular sheath followed by a conductive shield, a stainless protection and a final bonded polyethylene jacket to provide a complete cable structure.

Another type of ribbon cable element is described in British Patent Application GB-A-2 141 558 and comprises a number of optical fibres each having an outer acrylate coating, being drawn in side-by-side relationship through a bath with an extrusion head which provides an overall coating of acrylate round the fibres and a pair of reinforcing elements at the extremeties of the fibres, thus forming an acrylate-coated reinforced optical fibre array. This array is sandwiched between a pair of polyethylene terephthalate tapes which are squeezed onto the array which is cured by ultraviolet radiation in an oven typically 70° or 80°C. The tapes are removed and are simply used to shape and process the optical fibre ribbon array.

Another optical fibre ribbon cable element is described in British Patent Application GB-A-2 036 599 in which optical fibre elements are embedded in plastics material which is extruded under pressure from an extruder around the optical fibres, which are passed through the extruder head.

All these known constructions described above suffer from the disadvantage of having to apply significant heat and/or pressure to the fibres at some stage and of complex and expensive manufacturing processes and also it is not easy to separate individual fibres from the ribbon in order to effect individual splices or connection in the field.

Yet another ribbon element is known from European Patent Application EP-A-0 170 185. One way of making this element is to form (see Fig. 4 thereof) a film on the surface of a drum and adhere the fibres to the film. Polymerisation is effected by UV radiation or in an alternative arrangement, by heating. However, such an arrangement provides a very weak and flimsy element which is unlikely to be suitable for use in a loose tube optical fibre cable without additional support, so that microbending and lack of protection will result and the fibres are likely to break away from the film.

It is an object of the present invention to provide a cheap optical fibre cable element comprising a plurality of fibres held in a unitary structure particularly but not exclusively a ribbon structure, for incorporation in an optical fibre cable.

According to the present invention there is provided a method of manufacturing an optical fibre cable ribbon element, the method comprising supporting a plurality of optical fibres (43) in a side-by-side relationship, guiding the fibres through a die (44) to provide the side-by-side relationship, applying an adhesive material (47a) to the fibres by completely immersing the fibres in the adhesive material, and causing the adhesive material to harden to form a complete encapsulation around the fibres and to form a self supporting ribbon element, characterised in that the die (44) is out of contact with the adhesive material, and that the fibres are maintained in close proximity in their side-by-side relationship by the surface tension of the adhesive before it hardens on the fibre.

Preferably the element is in the form of a ribbon containing upto twelve optical fibres in side-by-side relationship.

Preferably the adhesive material is a solvent-based acrylic co-polymer system which is air dried.

In order that the invention can be clearly understood reference will now be made to the accompanying drawings in which:-
Fig. 1 shows a manufacturing process for a ribbon optical fibre cable element according to an embodiment of the invention;
Fig. 2 shows part of the apparatus of Fig. 1;
Fig. 3 shows a cross-section through an optical fibre cable incorporating a ribbon element according to an embodiment of the present invention;
Fig. 4 shows a manufacturing process for a ribbon optical fibre cable element according to a further embodiment of the present invention;
Fig. 5 shows details of Fig. 4, and;
Figs. 6 and 7 are graphs showing the variation in adhesive coating thickness with line speed for un-inked (Fig. 6) and inked (Fig. 7) fibres using the process shown in Figs. 4 and 5.

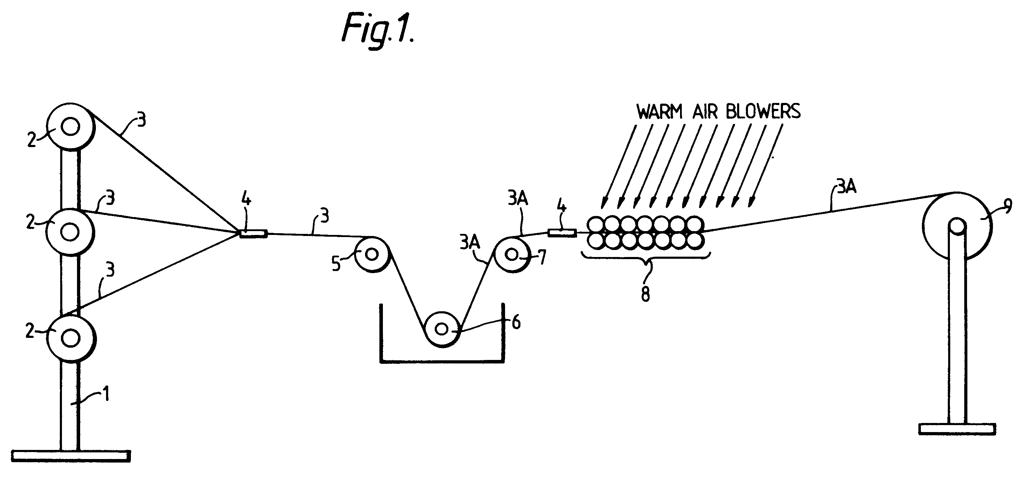

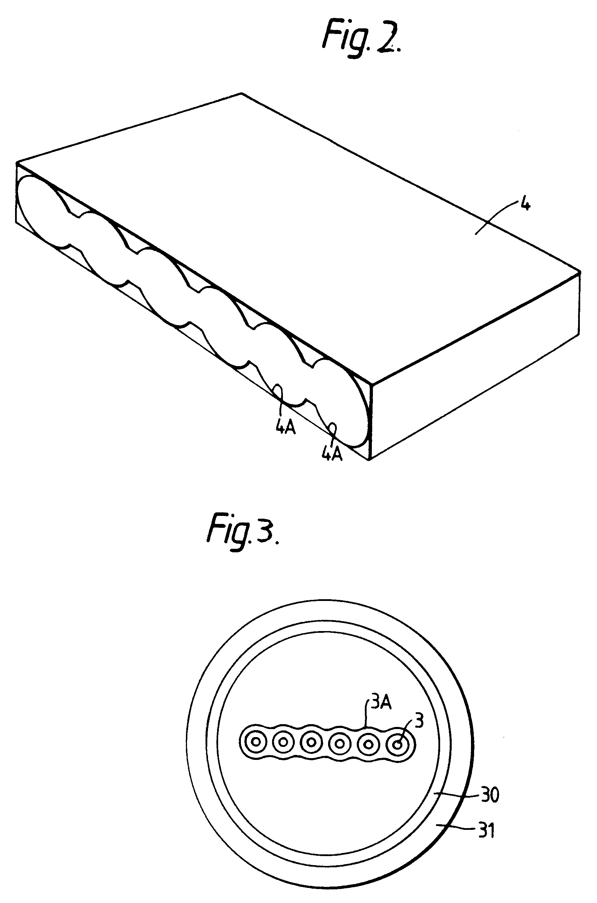

Referring to Fig. 1 a fibre payoff stand 1 carries reels 2 of acrylate coated fibres 3 which are drawn through a fibre guide 4 such as the one shown in Fig. 2 of the accompanying drawings. This guide maintains the fibres in flat side-by-side relationship with their adjacent sides not quite touching.

The fibres are then drawn over a first roller 5 around a second roller 6 located in a dip tank and up and around a third roller 7. The dip tank contains an air drying adhesive material and a particularly suitable material is that sold under the trade name Tempro 20 manufactured by Imperial Chemical Industries. This particular material is a water-based acrylic copolymer system which dries in air extremely quickly to form a tough coating. It is intended as a temporary protective coating system for e.g. motor vehicles, but we have found that it is suitable as an adhesive to form a ribbon cable element.

Thus as the fibres are immersed in the acrylic copolymer in the dip tank they become completely coated at ambient pressure and as they leave the dip tank and pass around the roller 7 they are passed through a second fibre guide 4 similar to the first one and also as shown on a larger scale in Fig. 2 of the drawings. From there the coated fibres 3A pass through a roller assembly 8 over which air is blown at ambient temperature typically in the range 15° to 40°C as indicated by the arrows and the coated fibres in the form of a ribbon ate taken up around the ribbon take up spool 9.

It is envisaged that the guide pulleys 5, 6 and 7 can be cylindrical with smooth surfaces, but it may be necessary to have grooved guide pulleys so as to maintain exactly the desired side-by-side relationship of the optical fibres in the formation of the ribbon cable element, the grooves in the pulleys having a spacing corresponding to the fibre guides 4. Likewise the roller assembly 8 may also be found to be more effective with a grooved surface to once again maintain the side-by-side alignment.

Referring to Fig. 2 of the drawings the fibre guide comprises a PTFE block 4 defining a plurality of circular apertures 4A through which the bare optical fibres are a sliding fit and so that the adjacent surfaces of the fibres do not quite touch one another.

The acrylic copolymer described gives a coating thickness of about 6 microns and it has been found that a satisfactory ribbon cable element is produced.

Referring to Fig. 3 an example of an optical fibre cable incorporating a ribbon element made by the method shown in Fig. 1 is shown. The ribbon element comprises six acrylate coated optical fibres 3 in a ribbon format and held together solely by the acrylate copolymer system 3A around the fibres 3. The system 3A preferably has good water blocking properties to prevent water contacting the fibres. This ribbon cable element is housed in an extruded plastics sheath 30 surrounded by a strength member 31 which is optional. The strength member may be braided wires or non-metallic strength members. There could be other ribbon elements such as 3A within the cable and there could also be incorporated longitudinal water-blocking material in the cable.

One significant advantage of the present invention is the use of a cold adhesive material to form the ribbon cable element whereas all previous proposals for manufacturing ribbon cable elements have required the use of relatively high temperatures and/or pressures in order to form the ribbon element, either through the use of a high temperature extruder to extrude the material or by the use of high temperature to cause adhesion and curing of plastics material around the optical fibres.

Another significant advantage is the higher fibre count per unit volume provided by the ultr-thin system 3A causing the fibres, i.e. a coating of the order of 6 microns around the fibres and between the fibres. The ambient drying temperature chosen is that which most quickly dries the system 3A. Under some circumstances this might be as low as 5°C i.e. a cold ambient air blow.

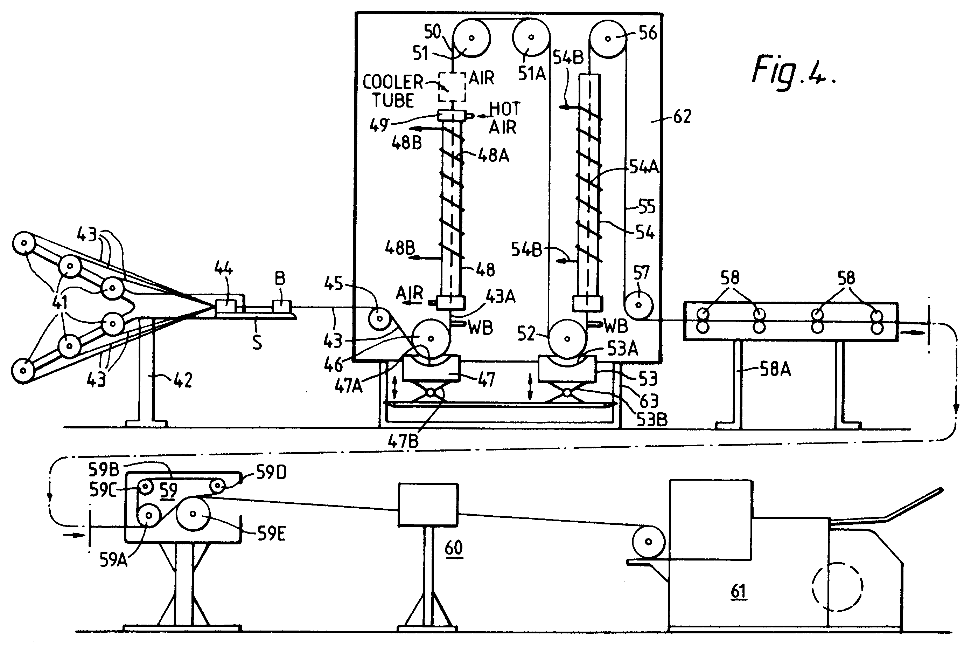

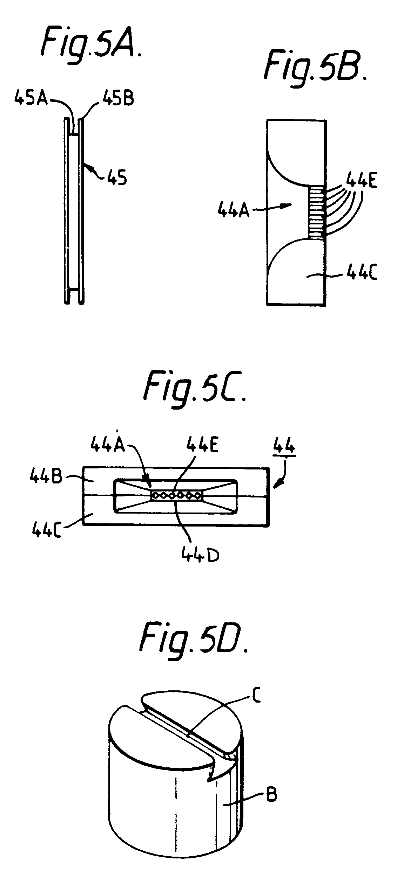

An improved system is shown in Fig. 4. Primary acrylate-coated fibres 43 are fed from braked fibre pay-off drums such as 41 supported on frame 42 via a fibre guide and die block 44 which is shown in greater detail in Fig. 5B and 5C. It comprises a two-part rectangular die block of brass with trumpet-shaped aperture 44A, and made of two similarly-shaped parts 44B, 44C which can be separated. The aperture 44A at its smaller end is formed by a stainless steel insert 44D defining six discrete grooves 44E, one for each of the six fibres.

From the die block 44 the fibres pass side-by-side into the guide channel C of a guide channel Block B supported on a cantilever support S and shown in greater detail in Fig. 5D. The channel has smoothly rounded ends and a flat bottom also with rounded ends, to minimise fibre bending and move the fibres with closer proximity with each other. Thus the width of channel C is less than the width of the insert defining the grooves 44E. Although only six fibres are shown, up to twelve fibres could be used.

The fibres 43 pass from the block B over a guide pulley 45 which has a cylindrical surface 45A with raised sidewalls 45B (Fig. 5A) and allows the fibres to lie in the correct predetermined side-by-side relationship as determined by the block B. An applicator pulley 46 (Fig. 4) also having a cylindrical surface with raised sidewalls feeds the fibres into an adhesive dip-bath 47 still maintaining the correct side-by-side positioning. This completely coats the fibres in a water-based acrylic co-polymer system adhesive 47A "Tempro 20" in the dip bath and the coated fibres 43A then ascend within a drying tube 48 in which drying air is blown through and parallel to the fibres by an air mover 49 at the top of the tube 48.

This air mover 49 is designed to prevent any vibration of the fibres so that the relative positioning of the fibres in the drying tube is not disturbed by the air movement within the tube. The temperature of the tube 48 is controlled by a heater tape 48A which is wrapped around the tube and connected to an electrical supply 48B.

Alternatively the heater tape can be dispensed with and the air can be heated by an electric heater before it enters the tube 48. For example a hot air gun can be used to drive hot air into the tube via the airmover and the air flow is preferably from top to bottom of the tube.

Within the drying tube 48 the fibres become bonded together as a unitory ribbon element 50 by the adhesive which dries as a film completely encapsulating the fibres. The surface tension of the adhesive draws the fibres together and maintains the fibres side-by-side until the adhesive dries and the side-by-side position is fixed. The tension in the fibres prevents any of the fibres pulling over and crossing another fibre between B and 51. The element 50 emerges from the drying tube 48 and passes around an upper guide pulley 51 which is similar to that of Fig. 5A.

The element 50 descends to a further pulley 52, similar in shape to pulley 46 (Fig. 5A) in a second dip-bath 53 with adhesive 53A. A second drying tube 54 is used as shown for the drying of the adhesive. The second tube would be similar in all respects to the tube 48 with an air mover too. The element is then passed through the second drying tube 54 heated by heater 54A powered from supply 54B and this forms a second adherent coating on the element indicated by reference numeral 55.

The doubly coated fibres pass over pulley 56 and under pulley 57, both similar to Fig. 5A, and into pairs of nip rollers 58 which are cylindrical nylon rollers which maintain the element 55 flat and warp-free prior to entry into the capstan 59. This comprises a capstan driver wheel 59A, and a fibrous belt 59B stretched between two idler pulleys 59C, 59D and co-operating with wheel 59E to draw the element 55 through.

There is a tension controller 60 to ensure that minimal tension is applied to the element during take up on take up equipment 61.

The temperature in the drying tubes is maintained at between 60°C and 80°C. This provides a thermal cure necessary to ensure a smooth tack-free coating. The temperature in the tubes can be controlled by regulating the sir flow rate and the power to the heating elements 48a, 54a.

Coating trials were carried out on two different fibres, inked and uninked, for different line speeds, using only one dip bath and drying tube and taking the element 50 directly to the pulley 57 and for the following glue compositions:-

| | Base Resin (%) | Diluent (%) (Solvent) |
|---|---|---|
| i) | 20 (= 9.6% solids content | 80 |
| ii) | 40 | 60 |
| iii) | 60 | 40 |
| iv) | 80 | 20 |
| v) | 100 (= 48% solids content | 0 |

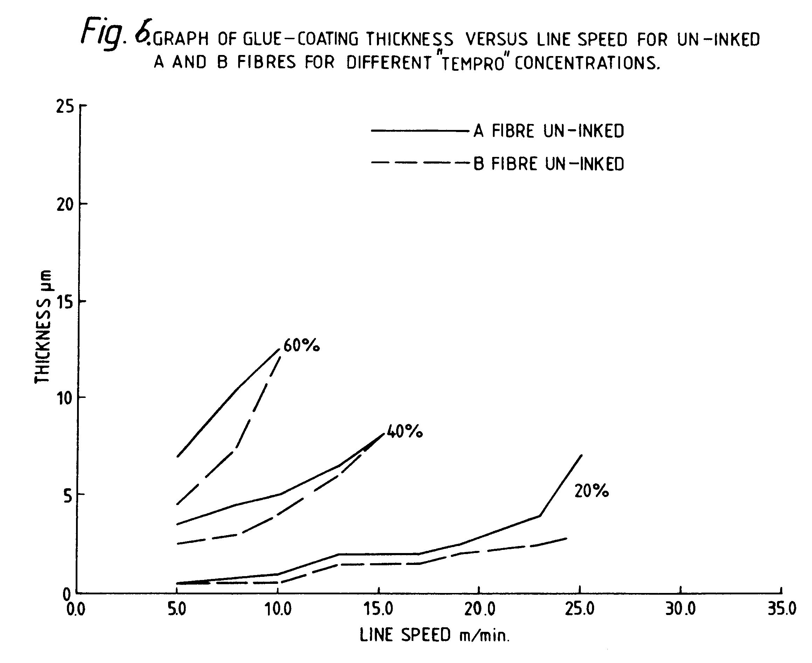

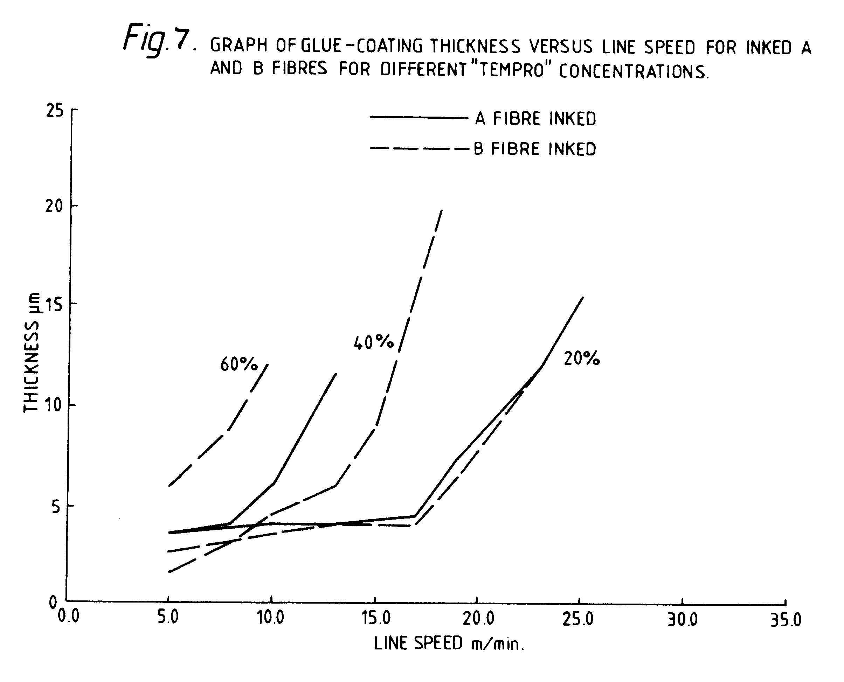

Figs. 6 and 7 show the graphs of glue-coating thickness for increasing line speeds for different resin concentrations, for both inked and uninked on-line coated fibres respectively. Concentrations as referred to later means the amount of base resin the in the mixture. The heat tube temperature was constant around 65°C. From these figures in the graphs the following deductions can be made. For a fixed resin concentration, the glue-coating thickness appears to increase non-linearly with the line speed. For a fixed resin composition and line speed, a thicker glue-coating is obtained for fibre A, both inked and uninked, compared to fibre B.

A greater coating thickness is obtained for inked fibres compared to uninked fibres, both for A and B fibres respectively. We discovered that a smooth no-tacky coating is obtained for resin concentration up to 60% for line speeds of up to 10m/min. However for 20% concentration, smooth coatings can be obtained for increased line speeds up to 15m/min. For resin concentrations greater than 60%, globulation occurred along with tacky coating. Hence trials were limited to 60% resin concentration. We presently believe a base resin content providing a solids content in the range 15% to 20% to be ideal. The resin material we use preferably comprises about 50% solution in an iso-propanol/secondary butanol mix together with the solvent diluent also comprising iso-propanol/secondary butanol.

The mechanics of the line were found to be important in providing a stable coating. In particular the position and quality of the top pullet above the exist of drying tubes is critical and the alignment of the pulleys 45 and 46 with each other and with the die 44 is also critical. For this reason the whole coating and drying apparatus, including items 45 to 57, are mounted on a back plate 62 supported on a frame 63 so that all the pulleys are strictly parallel axes and it is also very important that the feed of the side-by-side fibres 43 is directed exactly normal to the axes of the pulleys particularly pulley 45.

It should be noted that the coating baths 47 and 53 are on bases 47B, 53B, which can be operated (they have a scissor-like action) to raise and lower the baths.

It may in some circumstances be required to maintain the fibres in the dip baths spanning two pulleys (only one 46 is shown) so that the adhesive has easy access to all sides of the fibres. A level sensor will be incorporated in the dip baths and arranged to maintain a predetermined level of adhesion in the baths. Further a wiper brush WB is shown for wiping surplus material from the fibres prior to entry in the drying tubes. The width of the pulleys such as 45, 46 etcetera is about 6mm. The width of the ribbon is determined by the size of the fibres and the viscosity of the adhesive where surface tension draws the fibres together.

It is also proposed to provide a cooler tube about 1 metre long above the heating tube 48 and before the element 50 contacts pulley 51 and this is indicated in broken line in Fig. 4. Cold air is blown through in the same way that the hot air is blown through the tube 48 and this cools the element 50 to between 0°C and 20°C to ensure that the element coating is hardened before it runs around pulley 51. This ensures that the dried adhesive is not still soft due to temperature when it touches the pulley, otherwise a slight tackiness of the dried resin may cause the pulley to stick to the element and/or damage the adhesive coating on the fibres.

Similarly a second cooler (not shown) could be used after heater tube 54 before pulley 56 is contacted.

## Claims

1. A method of manufacturing an optical fibre cable ribbon element, the method comprising supporting a plurality of optical fibres (43) in a side-by-side relationship, guiding the fibres through a die (44) to provide the side-by-side relationship, applying an adhesive material (47a) to the fibres by completely immersing the fibres in the adhesive material, and causing the adhesive material to harden to form a complete encapsulation around the fibres and to form a self supporting ribbon element, characterised in that the die (44) is out of contact with the adhesive material, and that the fibres are maintained in close proximity in their side-by-side relationship by the surface tension of the adhesive before it hardens on the fibre.

2. A method as claimed in claim 1, characterised in that heated gas is blown over the applied adhesive material.

3. A method as claimed in claim 1 or claim 2, characterised in that the adhesive material is a solvent-based system which is air-dried.

4. A method as claimed in claim 3 characterised in that the adhesive material comprises a solution in an iso-propanol/secondary butanol mix.

5. A method as claimed in claim 3, characterised in that the adhesive is a solvent-based acrylic copolymer system.

6. A method as claimed in claims 1 to 5 characterised in that the adhesive material is applied by dipping the optical fibres beneath the surface of a liquid bath of the adhesive material.

7. A method as claimed in any preceding claim characterised in that the adhesive is applied at or close to the ambient pressure.

8. A method as claimed in any of claims 1 to 7, characterised in that applied material is dried by drawing the fibres upward through a heated drying tube.

9. A method as claimed in any preceding claim characterised in that the fibres are maintained under a tension while being transported during the application of the adhesive material and during curing of the material, wherein the surface tension of the adhesive draws the fibres together and the tension in the fibres prevents fibres crossing one another.

## Patentansprüche

1. Verfahren zur Herstellung eines bandförmigen faseroptischen Kabelelementes, wobei das Verfahren die Halterung einer Mehrzahl von optischen Fasern (43) Seite an Seite zueinander, die Führung der Fasern durch eine Matrix (44) zur Erzielung dieser seitlich nebeneinanderliegenden Beziehung, das Aufbringen eines Klebematerials (47a) auf die Fasern durch vollständiges Eintauchen der Fasern in das Klebematerial und das Bewirken einer Aushärtung des Klebematerials zur Bildung einer vollständigen Einkapselung um die Fasern und zur Bildung eines selbsttragenden bandförmigen Elementes umfaßt,
dadurch gekennzeichnet, daß die Matrix (44) außer Berührung mit dem Klebematerial steht, und daß die Fasern durch die Oberflächenspannung des Klebematerials vor dessen Aushärtung auf der Faser nahe beieinander in ihrer seitlich nebeneinanderliegenden gehalten werden.

2. Verfahren nach Anspruch 1,
dadurch gekennzeichnet, daß ein erwärmtes Gas über das aufgebrachte Klebematerial geblasen wird.

3. Verfahren nach Anspruch 1 oder 2,
dadurch gekennzeichnet, daß das Klebematerial ein System auf Lösungsmittelgrundlage ist, daß luftgetrocknet wird.

4. Verfahren nach Anspruch 3,
dadurch gekennzeichnet, daß das Klebematerial eine Lösung in einer Mischung aus Isopropanol/sekundärem Butanol umfaßt.

5. Verfahren nach Anspruch 3,
dadurch gekennzeichnet, daß das Klebemittel ein Acryl-Mischpolymersystem auf Lösungsmittelgrundlage ist.

6. Verfahren nach einem der Ansprüche 1 bis 5,
dadurch gekennzeichnet, daß das Klebematerial durch Eintauchen der optischen Fasern unter die Oberfläche eines flüssigen Bades des Klebematerials aufgebracht wird.

7. Verfahren nach einem der vorhergehenden Ansprüche,
dadurch gekennzeichnet, daß das Klebematerial bei oder nahezu bei Umgebungsdruck aufgebracht wird.

8. Verfahren nach einem der Ansprüche 1 bis 7,
dadurch gekennzeichnet, daß das aufgebrachte Material dadurch getrocknet wird, daß die Fasern durch ein geheiztes Trocknungsrohr nach oben abgezogen werden.

9. Verfahren nach einem der vorhergehenden Ansprüche,
dadurch gekennzeichnet, daß die Fasern unter einer Spannung gehalten werden, während sie während des Aufbringens des Klebematerial und während des Härtens des Materials transportiert werden, wobei die Oberflächenspannung des Klebematerials die Fasern zusammenzieht und die Spannung in den Fasern das Überkreuzen der Fasern verhindert.

## Revendications

1. Procédé de fabrication d'un élément de câble à fibres optiques sous forme d'un ruban, le procédé comprenant le support de plusieurs fibres optiques (43) afin qu'elles soient côte à côte, le guidage des fibres dans une filière (44) afin qu'elles prennent des positions côte à côte, l'application d'une matière adhésive (47a) aux fibres par immersion totale des fibres dans la matière adhésive, et le durcissement de la matière adhésive afin qu'elle forme un enrobage complet autour des fibres et qu'elle forme un élément de ruban cohérent, caractérisé en ce que la filière (44) n'est pas au contact de la matière adhésive, et les fibres sont maintenues très près les unes des autres dans leurs positions côte à côte par la tension superficielle de l'adhésif avant qu'il ne durcisse sur les fibres.

2. Procédé selon la revendication 1, caractérisé en ce qu'un gaz chaud est soufflé sur la matière adhésive appliquée.

3. Procédé selon la revendication 1 ou 2, caractérisé en ce que la matière adhésive est un système à base de solvant qui est séché à l'air.

4. Procédé selon la revendication 3, caractérisé en ce que la matière adhésive est une solution dans un mélange d'isopropanol et de butanol secondaire.

5. Procédé selon la revendication 3, caractérisé en ce que l'adhésif est un système copolymère acrylique à base d'un solvant.

6. Procédé selon les revendications 1 à 5, caractérisé en ce que la matière adhésive est appliquée par trempage des fibres optiques sous la surface d'un bain liquide de la matière adhésive.

7. Procédé selon l'une quelconque des revendications précédentes, caractérisé en ce que l'adhésif est appliqué à la pression ambiante ou à son voisinage.

8. Procédé selon l'une quelconque des revendications 1 à 7, caractérisé en ce que la matière appliquée est séchée par traction des fibres vers le haut dans un tube chauffé de séchage.

9. Procédé selon l'une quelconque des revendications précédentes, caractérisé en ce que les fibres sont maintenues sous tension lorsqu'elles sont transportées pendant l'application de la matière adhésive et pendant le durcissement de la matière, la tension superficielle de l'adhésif rapprochant les fibres et la tension dans les fibres empêchant leur croisement.
